(19) **Europäisches Patentamt**

**European Patent Office**

**Office européen des brevets**

(11) **EP 0 914 866 B1**

(12) **FASCICULE DE BREVET EUROPEEN**

(45) Date de publication et mention
de la délivrance du brevet:
**21.07.2004 Bulletin 2004/30**

(51) Int Cl.$^7$: **B01J 29/14**, B01J 29/06,
B01D 53/86

(21) Numéro de dépôt: **98402666.6**

(22) Date de dépôt: **27.10.1998**

(54) **Procédé pour l'élimination dans les gaz des oxydes d'azote par réduction catalytique sélective à l'ammoniac ne provoquant pas la formation de protoxyde d'azote**

Verfahren zur Entfernung der Stickoxide aus den Abgasen mittels selektiver katalytischer Reduktion mit Ammoniak ohne Stickstoffprotoxidbildung

Process for removing the nitrogen oxides from the exhaust gases using the selective catalytic reduction with ammonia, without formation of dinitrogen oxide

(84) Etats contractants désignés:
**AT BE CH DE DK ES FR GB IT LI LU NL SE**

(30) Priorité: **04.11.1997 FR 9713861**

(43) Date de publication de la demande:
**12.05.1999 Bulletin 1999/19**

(73) Titulaire: **Grande Paroisse S.A.**
**92800 Puteaux (FR)**

(72) Inventeurs:
• **Coq, Bernard, Lab. de M.C.C. en C.O.**
  **34296 Montpellier Cedex (FR)**
• **Delahay, Gérard, Lab. de M.C.C. en C.O.**
  **34296 Montpellier Cedex (FR)**
• **Fajulas, François, Lab. de M.C.C. en C.O.**
  **34296 Montpellier Cedex (FR)**
• **Kieger, Stéphane**
  **67500 Haguenau (FR)**

• **Neveu, Bernard**
  **92800 Puteaux (FR)**
• **Peudpiece, Jean-Bernard**
  **76130 Mont Saint Aignan (FR)**

(74) Mandataire: **Haicour, Philippe Godefroy**
**ATOFINA**
**4-8, cours Michelet**
**La Défense 10**
**92091 Paris La Défense Cedex (FR)**

(56) Documents cités:
EP-A- 0 415 410    DE-A- 4 443 301
US-A- 5 234 876

• **TORRE-ABREU C ; RIBEIRO M F ; HENRIQUES C ; DELAHAY G : "Characterization of CuMFI catalysts by temperature programmed " APPLIED CATALYSIS B:ENVIRONMENTAL, vol. 12, no. 2-3, 12 juin 1997, pages 249-262, XP002094744**

**Description**

La présente invention a trait à la destruction des oxydes d'azote dans les gaz tels que les gaz de combustion ou les effluents des ateliers de synthèse de l'acide nitrique, selon le procédé de réduction catalytique sélective (SCR, mis pour selective reduction catalysis) à l'ammoniac.

Il est connu que l'on peut réduire les oxydes d'azote (NO et $NO_2$, ci-après NOx) en azote $N_2$ par réduction sélective par l'ammoniac (Bosch H. et Janssen F., Catal. Today, 1988, 369) et éliminer ainsi des gaz rejetés à l'atmosphère ces composés que l'on sait contribuer à la formation des brouillards photochimiques et des pluies acides. La réduction des NOx emprunte pour l'essentiel les réactions obéissant aux bilans globaux suivants :

$$4\ NO + 4\ NH_3 + O_2 \rightarrow 4\ N_2 + 6\ H_2O$$

$$2\ NO_2 + 4\ NH_3 + O_2 \rightarrow 3\ N_2 + 6\ H_2O$$

$$NO + NO_2 + 2\ NH_3 + O_2 \rightarrow 2\ N_2 + 3\ H_2O$$

qui se développent catalytiquement. Parmi les catalyseurs exploités, l'industrie a notamment retenu les faujasites cubiques (FAU) échangées au cuivre (brevet européen EP 0483201, brevet US 5,536,483), qui présentent une excellente activité dans la fenêtre de températures 250-400°C et qui sont particulièrement bien adaptées au traitement des gaz de queue de la plupart des ateliers d'acide nitrique Jusqu'à un passé récent, on ne s'était guère inquiété de la présence de protoxyde d'azote ($N_2O$) dans ces rejets, un gaz jugé inoffensif parce que n'étant pas mis en cause dans la formation des pluies acides, jusqu'à ce qu'on prenne conscience de sa contribution non négligeable à l'effet de serre. Son élimination est ainsi devenue une préoccupation des services publics et des industriels. Il se trouve que les gaz traités par SCR à l'ammoniac sur la plupart des catalyseurs de l'art antérieur, notamment sur les faujasites Y échangées au cuivre, peuvent donner lieu, dans certaines fenêtres de température, à la formation de $N_2O$.

On sait maintenant, en particulier par l'exploitation des profils de SCR de NOx par $NH_3$, distinguer deux vagues de réduction de NO, respectivement vers 230°C et au-delà de 325°C, et l'on peut noter sur ce domaine de température, qu'il se développe également une réaction parasite de réduction du NO en protoxyde d'azote $N_2O$. Il a été possible de corréler cette formation de $N_2O$ à un profil de réduction en température programmée par l'hydrogène (TPR, mis pour temperature programmed reduction) des espèces "cuivre" du catalyseur, selon une méthode qui a été exposée dans "Characterized Catalysts via Temperature-Programmed Reduction", Chemtech, 1977, 316-302, par Jenkins J.W., McNicol B.D., Robertson S.D., auteurs qui ont développé la technique du TPR avec analyse par cellule catharométrique. Le processus expérimental correspondant est développé ci-après au niveau des exemples.

On vient de trouver, et cela est à la base de la présente invention, que certaines zéolithes cuivriques doublement échangées ne généraient pas de $N_2O$ sur la gamme des températures de fonctionnement de la réduction SCR. Les zéolithes sont des aluminosilicates cristallins microporeux de formule générale

$$M_{f/n}^{n}\ (AlO_2)_f\ (SiO_2)_g\ hH_2O$$

dans laquelle

M est le cation compensateur de la charge négative générée par le remplacement des tétraèdres $SiO_4$ par les tétraèdres $AlO_4$,
n est le degré d'oxydation de M,
f est le nombre de moles $AlO_2$ par maille,
g est le nombre de moles $SiO_2$ par maille,
h est le nombre de moles $H_2O$ par maille.

Les catalyseurs SCR de l'art antérieur sont des faujasites cubiques Y (c'est-à-dire de rapport molaire Si/Al > 2,5) dont le cuivre est, parmi les ions compensateurs imposés par le rapport Si/Al fini de la zéolithe, l'ion actif. On les représentera ici par

$$Cu(x)M(100-x)Y$$

dans laquelle

- Y représente un réseau faujasite cubique (FAU), de rapport Si/Al>2,5),
- x est le taux d'échange théorique en ions cuivriques, exprimé en pour-cent de la capacité totale d'échange de ladite faujasite,
- M étant $H^+$, $Na^+$, $K^+$, $NH_4^+$ ou tout autre cation au taux de saturation nécessaire pour assurer la neutralité électrique de la structure.

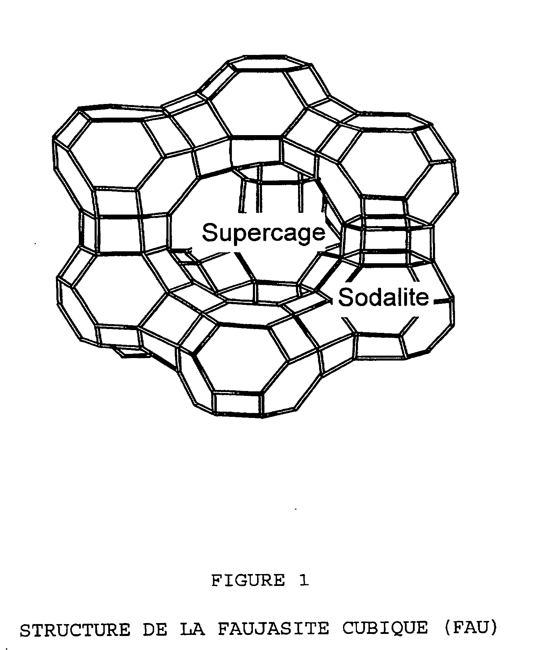

La proportion et la localisation des ions cuivre au sein de la structure faujasite ne sont certainement pas indifférentes à son activité SCR et à la production parasite de $N_2O$. La figure 1 rend compte de cette structure dans laquelle on distingue un agencement de tétraèdres $SiO_4$ / $AlO_4$ en cuboctaèdres tronqués appelés cages sodalite ou cages β, communiquant par des prismes hexagonaux et délimitant des cavités plus vastes, les cages α ou supercages. Par maille cristalline de la faujasite cubique (FAU), il y a 16 prismes hexagonaux, 8 cages sodalites et 8 supercages. Les diamètres de ces cavités et de leurs ouvertures sont les suivants :

|  | Supercage | Cage sodalite | Prisme hexagonal |
|---|---|---|---|
| Ø de la cavité (nm) | 1,3 | 0,66 | |
| Ø de l'ouverture (nm) | 0,74 - 0,9 | 0,22 - 0,26 | 0,24 |

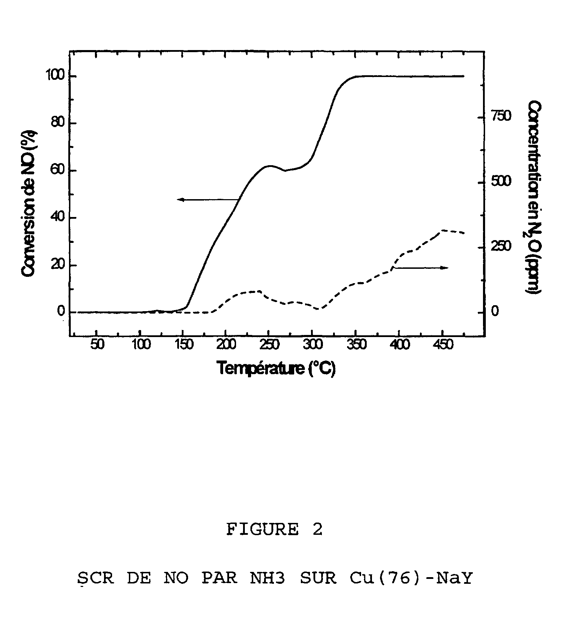

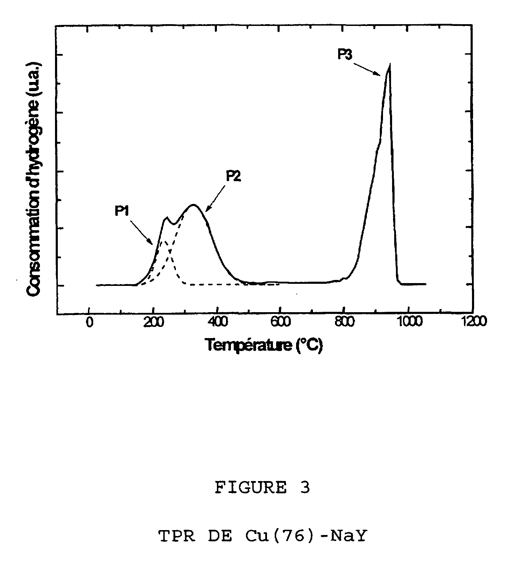

Sur le profil SCR d'une faujasite Y échangée au cuivre de formule Cu(76)-NaY (le symbole -NaY signifiant que dans le cas d'espèce l'échange a porté sur une faujasite Y sodique) pour la conversion NO et la production de $N_2O$ (figure 2), on repère deux vagues de conversion de NO vers 230°C et au-delà de 325°C, et deux vagues de formation de $N_2O$ à 240°C et à partir de 310°C. En même temps, on observe sur le diagramme de TPR par l'hydrogène de cette Cu(76)-NaY deux pics $P_1$ et $P_2$, résolus par déconvolution gaussienne, à 222°C et à 327°C respectivement pour la zone de basse température (<800°C) et un pic à 952°C pour la zone de haute température (>800°C), le rapport des aires $A_1/A_2$ correspondant aux pics $P_1$ et $P_2$ respectivement étant inférieur à 1,5 dans ce cas précis (figure 3). L'interprétation qu'on en donne est que le cuivre est en grande partie localisé dans les cages sodalites et qu'il participe à la génération de $N_2O$.

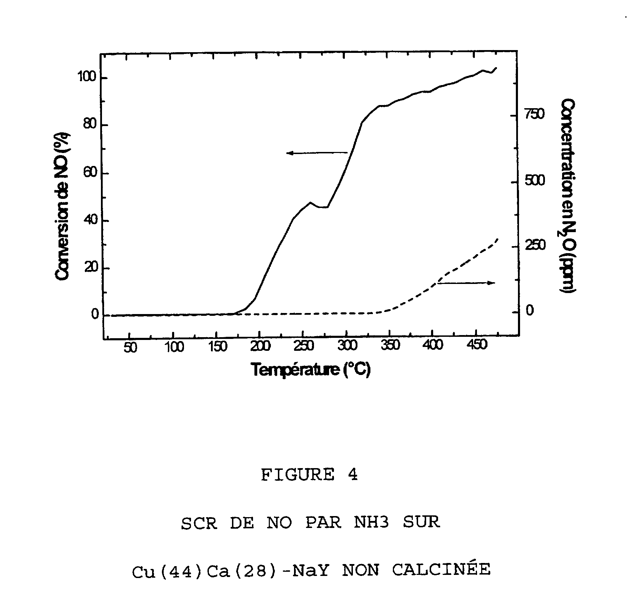

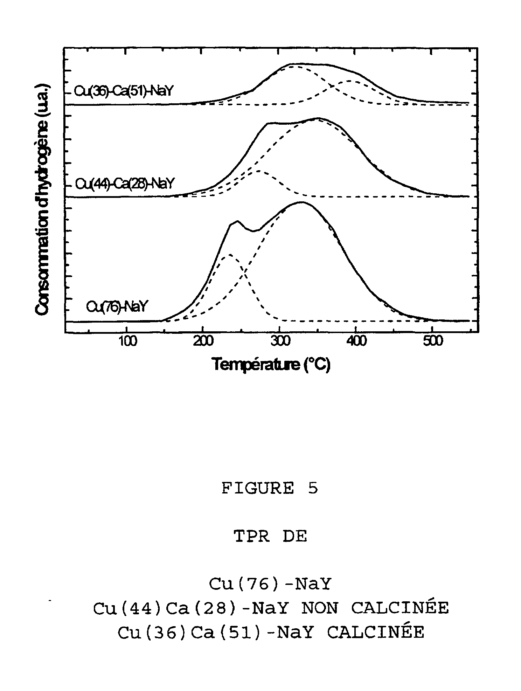

Les profils SCR et TPR d'une faujasite Y ordinairement doublement échangée au cuivre et au calcium et répondant à la formule Cu(44)Ca(28)-NaY (figures 4 et 5) ne sont pas sensiblement différents de ceux d'une faujasite Cu(76)-NaY et traduisent un comportement qui relève de la même interprétation.

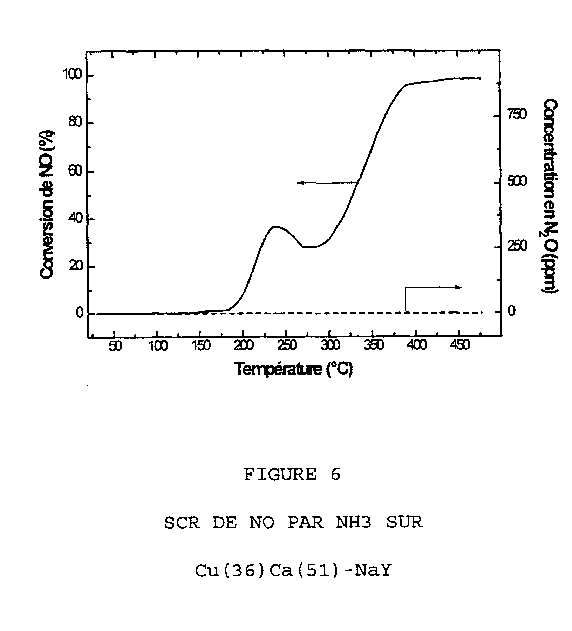

Si on examine maintenant les profils SCR et TPR d'une faujasite doublement échangée cuivre et calcium, mais selon le mode opératoire particulier qui consiste à procéder d'abord à l'échange partiel du calcium, à calciner le résultat de ce premier échange, puis à poursuivre par un second échange au cuivre, on observe une modification du diagramme TPR (fig. 5) qui ne comporte plus qu'une seule vague de réduction du cuivre à basse température vers 247°C et le profil SCR (fig. 6) n'affiche plus de production de $N_2O$. L'interprétation qu'on en donne est que dans cette faujasite cuivrique qui provoque toujours la destruction catalytique du NO, mais ne génère plus de $N_2O$, le cuivre est majoritairement localisé dans les grandes cages.

L'invention consiste à développer ce constat, à l'appliquer à la SCR à l'ammoniac des oxydes d'azote NOx sans génération de $N_2O$, et à le généraliser à d'autres zéolithes comme moyens catalytiques de ce procédé. Il n'y a aucune raison de limiter l'invention aux faujasites Y, et les faujasites ayant un rapport Si/Al de 1 à 20 font partie de l'invention. On a vérifié que la propriété s'étendait, non seulement aux faujasites présentant dans leur structure des cages sodalites, mais encore aux zéolithes dans lesquelles l'arrangement structural des tétraèdres $SiO_4$ et $AlO_4$ ménage à la fois des petites cavités accessibles au travers de fenêtres à 6 tétraèdres et de grandes cavités accessibles au travers de fenêtres formées d'au moins 8 tétraèdres, et dont le cuivre occupe seulement les grandes cavités.

Pour conférer une réalité pratique à cette dernière proposition, on demande à la TPR d'en fournir la caractéristique mesurable. Ces solides à petites cavités, pour l'essentiel libres de cuivre, et à grandes cavités où le cuivre est majoritairement logé, sont ceux qui présentent deux vagues de consommation d'hydrogène en réduction en température programmée, la première vague à une température inférieure à 800°C, qu'on attribue principalement à la réduction des ions $Cu^{2+}$ en cuivre $Cu^+$ du cuivre localisé dans les grandes cavités, la deuxième au-delà de 800°C, qu'on attribue à la réduction des ions $Cu^+$ en $Cu^0$ (cuivre métal), la consommation en hydrogène correspondant à ce deuxième pic étant sensiblement égale à une demi mole d'hydrogène par mole de cuivre existant dans le solide. La première vague (<800°C) est composée de deux pics $P_1$ et $P_2$ résolus par déconvolution gaussienne et le rapport des aires $A_1/A_2$

correspondant aux pics $P_1$ et $P_2$ respectivement est supérieur à 1,5.

Le comportement avantageux des zéolithes selon l'invention n'est obtenu que pour des taux suffisants d'échange en cuivre. Mais d'autre part, le cuivre des zéolithes cuivriques trop fortement échangées finit par se trouver dans des états qui ne sont pas ceux souhaités, soit qu'une partie de plus en plus importante du cuivre vient occuper les petites cages, soit que le cuivre des grandes cages se concentre sous forme de clusters, soit même qu'il n'y ait plus à proprement parler d'échange, mais une imprégnation par laquelle une part importante au moins du cuivre n'est pas incorporé au sein de la structure zéolitique. Toujours est-il qu'il convient de ne considérer comme zéolithes cuivriques de l'invention que celles dont le taux d'échange en cuivre est de 5 à 60 %.

Moyennant ces conditions et ces délimitations, l'invention s'énonce ainsi : dans un procédé de réduction catalytique des oxydes d'azote, le perfectionnement qui consiste à utiliser comme catalyseur, une zéolithe partiellement échangée au cuivre ne générant pas de protoxyde d'azote,

- ladite zéolithe étant une zéolithe ayant un rapport Si/Al de 0,8 à 20,
- dont l'arrangement structural de ses tétraèdres $SiO_4$ et $AlO_4$ ménage à la fois des petites cavités accessibles au travers de fenêtres à 6 tétraèdres et de grandes cavités accessibles au travers de fenêtres formées d'au moins 8 tétraèdres,
- dont le taux d'échange en cuivre est de 5 à 60 %,
- un tel solide étant caractérisé par deux vagues de consommation d'hydrogène en réduction en température programmée, la première vague à une température inférieure à 800°C, la deuxième au-delà de 800°C, la consommation en hydrogène correspondant au deuxième pic étant sensiblement égale à une demi-mole d'hydrogène par mole de cuivre présent dans le solide, la première vague étant composée de deux pics $P_1$ et $P_2$ résolues par déconvolution gaussienne et le rapport des aires $A_1/A_2$ correspondant aux pics $P_1$ et $P_2$ respectivement étant supérieur à 1,5.

Conviennent pour l'invention, les zéolithes partiellement échangées au cuivre des familles de la faujasite cubique (FAU), la faujasite hexagonale EMT, les intercroissances de faujasite cubique Y et faujasite hexagonale (EMT), (en particulier les ZSM-3, ZSM-20, CSZ-1, ECR-30), la zéolithe L, l'offrétite.

Pour certaines de ces zéolithes, on obtient le résultat recherché par simple échange cuivrique, par lequel le cuivre n'accède spontanément qu'aux grandes cavités de la structure. Tel est le cas pour les offrétites (OFF). Pour d'autres, en particulier les faujasites, il convient d'entraver l'accès du cuivre aux petites cavités, et l'on y parvient en procédant à un double échange, le premier avec des cations que l'on incite à occuper les petites cages, le second avec le cuivre qui viendra occuper les supercages. On a reconnu que conviennent pour le premier échange, les éléments métalliques M de valence 2, 3 ou 4 dont les cations ont un diamètre compris entre 0,16 et 0,28 nm.

Sont ainsi des moyens préférés de l'invention les faujasites répondant à une formule générale

$$Cu(x)M'(y)M(z)FAU$$

dans laquelle

- FAU représente un réseau faujasite cubique de rapport Si/Al de 0,8 à 20,
- M' est un élément métallique de valence 2, 3 ou 4, d'un diamètre ionique compris entre 0,16 et 0,28 nm, (Pour les diamètres ou rayons ioniques, voir Handbook of Chemistry and Physics, 56th edition, 1975-1976), CRC Press, F-209)
- M est H, Na, K,
- x, y et z sont les taux d'échange théoriques respectifs en ions cuivriques et en ions M et M', exprimés en pourcent de la capacité totale d'échange de ladite faujasite,

  x, y et z ayant des valeurs

$$5 \leq x \leq 60,$$

$$20 \leq y \leq 70,$$

$$z \leq 100 -x -y,$$

en particulier, les faujasites Y

$$Cu(x)M'(y)M(z)Y$$

Y représentant, comme précédemment, une faujasite cubique de rapport Si/Al > 2,5.

En fait, l'occupation des sites que constituent les petites cages par les ions de type M n'est convenablement assurée que si l'on procède à une calcination après le premier échange. L'effet de cette calcination intermédiaire est très clairement mis en évidence par la comparaison des figures 5 et 6 reproduisant les diagrammes TPR de faujasites Y Cu(44)Ca(28)NaY et Cu(36)Ca(51)NaY respectivement n'ayant pas subi de calcination et ayant subi une calcination intermédiaire. Dans le second cas, le pic $P_2$ est très atténué, traduisant l'occupation préférentielle des petites cages par l'ion calcium. On comprend tout l'intérêt des structures faujasites-calcium-cuivre CaCuY telles qu'on peut les atteindre par ce procédé. Cette calcination est opérée à une température suffisante pour éliminer l'anion ($NO_3^-$, $SO_4^{2-}$, $CO_3^{2-}$, $Cl^-$...) qui accompagne le cation cuivre au cours de l'échange. En pratique, cette température est de 350 à 650°C.

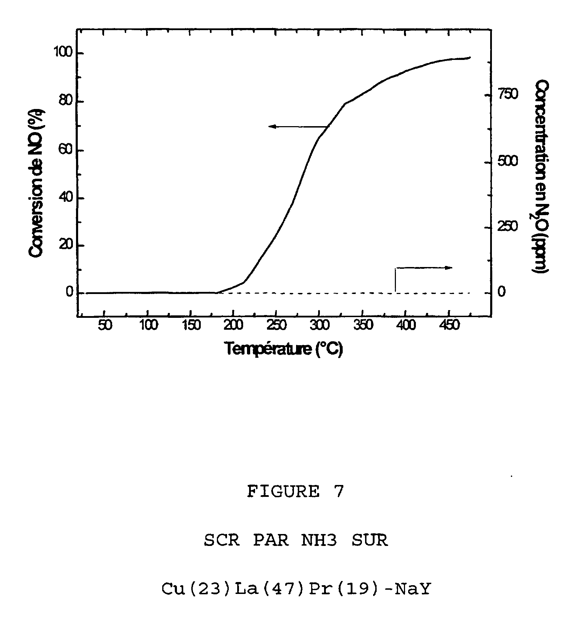

De la même façon, les zéolithes échangées avec les terres rares, et en particulier les faujasites mixtes terres rares / cuivre TrCuY, s'avèrent être de remarquables catalyseurs SCR ne générant pas de $N_2O$, et qui de plus opèrent la conversion totale des NOx à des températures sensiblement plus basses que celles des catalyseurs conventionnels à même teneur en cuivre (voir fig. 7, réponse en SCR-NH3 de Cu(23)La(47)Pr(19)-NaY). Ces produits sont industriellement accessibles par échange avec des solutions de sels de cérium, de lanthane, mais surtout des sels de lanthanides commerciaux. Ce sont des produits nouveaux qui, en tant que tels, font également partie de la présente invention.

Le procédé de traitement des gaz par réduction catalytique sélective des oxydes d'azote dans les gaz oxygénés en contenant, qui selon l'invention ne génère pas de protoxyde d'azote, et qui consiste à faire passer lesdits gaz, qui dans le cas des effluents des ateliers d'acide nitrique contiennent NOx de 0,02 à 0,6 %, $O_2$ de 1,5 à 3, %, $H_2O$ de 0,3 à 2,5 %, à des températures comprises entre 180 et 500°C, sous des pressions totales comprises entre la pression atmosphérique et 15 bars, sur un catalyseur dit SCR, est adapté très simplement du procédé de l'art antérieur, par remplacement pur et simple du catalyseur conventionnel par le catalyseur de l'invention.

Les exemples qui suivent, non limitatifs, feront mieux comprendre l'invention.

EXEMPLES

Les exemples qui suivent font référence aux profils de TPR. Le mode expérimental de TPR est dérivé de celui, devenu classique, de J. L. Lemaire, Characterization of Heterogeneous Catalysts, Marcel Dekker, 34, F. Delannay ed., New York, 1984). Les présents profils de TPR ont été obtenus dans les conditions suivantes :

- le gaz réducteur est un mélange hydrogène / argon (3/97 vol/vol), débit 18,5 $cm^3.min.^{-1}$;
- le détecteur est le détecteur de conductivité thermique qui équipe les chromatographes Shimadzu GC8;
- évolution de température de 25 à 905°C, à raison de 9°C par minute;
- la prise d'essai est le catalyseur, 50 mg, d'abord activé à 550°C pendant 1 heure après montée en température à raison de 5°C par minute dans l'hélium (débit 13,6 $cm^3.min.^{-1}$).

Exemple 1 : préparation d'un catalyseur CuCa-NaY selon l'invention.

On prépare une faujasite mixte Cu(36)Ca(51)-NaY selon le processus opératoire suivant.

1) Mise en solution de 0,74 g de nitrate de calcium dans une solution aqueuse de 500 ml à pH = 7.
2) Ajout de 2 g du support CBV 100 de Süd Chemie, V/m = 250 ml.g-1 qui est une faujasite cubique Y sodique.
3) Agitation pendant 24 heures.
4) Centrifugation de la solution, rejet de la phase liquide, lavage du gâteau avec 100 ml d'eau à pH = 7, centrifugation, rejet de la phase liquide.
5) Séchage du gâteau pendant 1 heure à environ 80°C.
6) Calcination du solide par montée en température de l'ambiante à 500°C (3°C/min), palier de 24 heures à 500°C. Le résultat est une Ca(57)-NaY.
7) Mise en solution de 0,80 g de nitrate de cuivre dans une solution aqueuse de 500 ml à pH = 5.
8) Ajout de la CaY obtenue sous 6), V/m = 250 ml g-1 .
9) Agitation pendant 24 heures.
10) Centrifugation de la solution, rejet de la phase liquide, lavage du gâteau avec 100 ml d'eau à pH = 5, centrifugation, rejet de la phase liquide.
11) Séchage du gâteau pendant 1 heure environ à 80°C.

12) Calcination du solide par montée en température de l'ambiante à 500°C (3°C/min), palier de 24 heures à 500°C.

On obtient une poudre qui se révèle à l'analyse avoir la composition d'une Cu(36)Ca(51)-NaY, à savoir en poids, Si = 23,5 %, Al = 9,98 %, Na = 1,09 %, Cu = 4,25 %, Ca = 3,78 %.

Exemple 2 : Préparation d'un catalyseur CuCa-NaY non conforme à l'invention.

On reproduit le processus opératoire de l'exemple 1, à la différence près que l'opération 6) de calcination a été omise. On obtient ainsi une poudre qui se révèle à l'analyse avoir la composition d'une Cu(44)Ca(28)-NaY, à savoir en poids, Si = 21,4 %, Al = 8,01 %, Na = 1,92 %, Cu = 4,13 %, Ca = 1,67 %.

Exemple 3 : préparation de diverses Cu(x)-NaY

On procède selon le mode opératoire suivant pour préparer a) Cu(76)-NaY, b) Cu(56)-NaY, c) Cu(37)-NaY :

1) On dissout respectivement a) 0,76 g, b) 0,42 g et c) 0,28 g de nitrate de cuivre dans 500 ml d'eau, et on ajuste le pH à 5.
2) On ajoute 2 g du support CBV 100 de Sud Chemie, V/m = 250 ml.g-1 .
3) On maintient sous agitation pendant 24 heures.
4) On centrifuge la solution, on rejette la phase liquide, on lave le gâteau avec 100 ml d'eau à pH = 5, on centrifuge on rejette la phase liquide.
5) On sèche le gâteau pendant 1 heure environ à 80°C.
6) On calcine le solide par montée en température de l'ambiante à 500°C (3°C/min), palier de 24 heures à 500°C.

On obtient ainsi des poudres qui se révèlent à l'analyse avoir la composition

a) d'une Cu(76)-NaY, avec en poids, Si = 22,25 %, Al = 8,09 %, Na = 1,97 %, Cu = 7,24 % ;
b) d'une Cu(56)-NaY, avec en poids, Si = 22,08 %, Al = 8,68 %, Na = 3,12 %, Cu = 5,72 % ;
c) d'une Cu(37)-NaY, avec en poids, Si = 23,22 %, Al = 8,75 %, Na = 4,56 %, Cu = 3,84 %.

Exemple 4 : comparaison des CuCa-NaY des exemples 1 et 2 et de la Cu(76)-NaY de l'exemple 3.

La figure 5 reproduit les profils TPR de ces trois zéolithes. On constate que la CuCa-NaY "non calcinée" et la Cu(36)-NaY ont toutes deux une aire de pic $P_2$ importante, alors qu'elle est très réduite avec la Cu(36)Ca(51)-NaY selon l'invention.
Les profils SCR NO, interprétés en sélectivité $N_2O$ montrent la génération de $N_2O$ avec les produits de comparaison Cu(76)-NaY (figure 2) et Cu(36)Ca(51)-NaY non calcinée (figure 4) et l'absence de $N_2O$ avec la Cu(36)Ca(51)-NaY selon l'invention (figure 6).

Exemple 5

On rapporte ici des résultats obtenus sur une unité pilote de réduction catalytique sélective des oxydes d'azote par $NH_3$, dans laquelle les gaz, NO, $NH_3$ et $O_2$, circulent sur 30 grammes de catalyseur, à une vitesse spatiale (VVH) de 10 000 à 20 000 h-1, à des températures de 453, 538 et 653°K. Dans le tableau ci-après, les chiffres sont ceux de la sélectivité en $N_2O$ pour une conversion en NO de 99%.

| Sélectivité en $N_2O$ (%) | 453°K 10 000h-1 | 653°K 10 000h-1 | 538°K 20 000h-1 |
|---|---|---|---|
| Cu(76)-NaY | 19,6 | 33,2 | 12,8 |
| Cu(56)Ca(51)NaY | 7,2 | 5,2 | 5,6 |

Exemple 6 : Cu(195)NaY

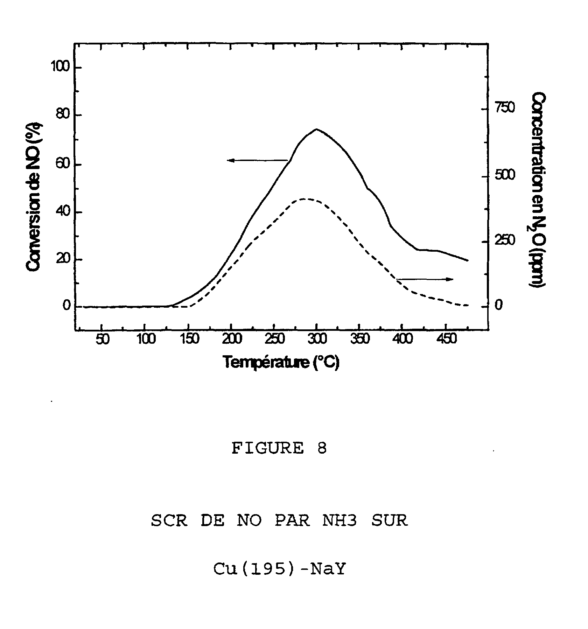

On réalise une Cu(195)-NaY par imprégnation selon le processus opératoire suivant.
On imprègne 2 g de NaY CBV 100 de Süd Chemie avec 5 ml d'une solution aqueuse de nitrate de cuivre. Le solide est ensuite séché à 353°K.
On obtient une poudre qui se révèle à l'analyse avoir la composition d'une Cu(195)-NaY, à savoir en poids, Si = 20,84 %, Al = 7,69 %, Na = 6,08 %, Cu = 17,65 %. On attribue à 80% du cuivre fixé la constitution de CuO. La courbe SCR obtenue avec ce catalyseur (figure 8) montre une forte production de $N_2O$.

Exemple 7 : influence de l'ion M'

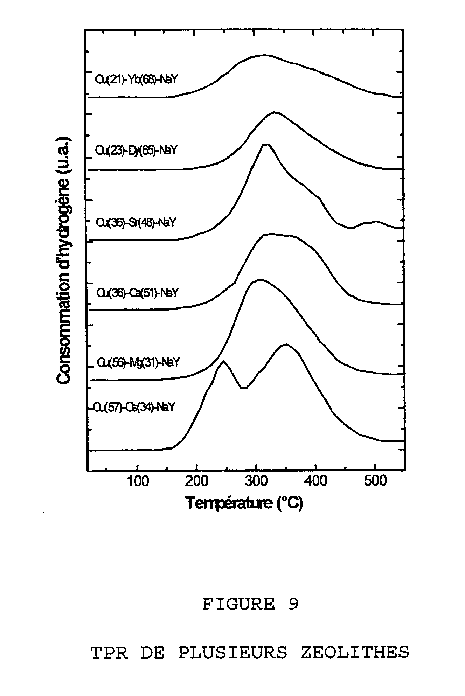

Le tableau ci-après reproduit les caractéristiques des diagrammes TPR obtenus pour des faujasites mixtes CuM'NaY contenant divers ions M'. $T_{p1}$ et $T_{p2}$ sont respectivement les températures des pics de réduction $P_1$ et $P_2$. Les aires $A_1$ et $A_2$ sont obtenues par déconvolution gaussienne du profil TPR de basse température (<800°C). $A_1/A_2$ est le rapport des aires de ces pics et $d_{M'}$ le diamètre des ions considérés. La figure 9 reproduit ces profils TPR.

| Ions M' | $T_{p1}$ (°C) | $T_{p2}$ (°C) | $A_1/A_2$ | $d_{M'}$ (nm) |
|---|---|---|---|---|
| sans ion M' | 222 | 327 | 0,26 | |
| $Cs^+$ | 237 | 352 | 0,31 | 0,334 |
| $Mg^{2+}$ | 307 | 377 | 1,74 | 0,132 |
| $Ca^{2+}$ | 342 | 422 | 2,00 | 0,198 |
| $Sr^{2+}$ | 317 | 397 | 2,47 | 0,224 |
| $Dy^{3+}$ | 302 | 407 | 2,85 | 0,182 |
| $Yb^{3+}$ | 337 | 427 | 1,93 | 0,172 |

On note l'intérêt des mixtes SrCu-NaY, CaCu-NaY et DyCu-NaY et leur conformité aux spécifications de la présente invention.

Exemple 8 : DyCu-NaY

On prépare une zéolithe mixte selon le mode opératoire de l'exemple 1, à la différence qu'au lieu de la solution de nitrate de cuivre de l'étape 7), on utilise une solution de dysprosium. Le produit final a la composition Cu(23)Dy(65) -NaY, qui s'établit en poids à Si = 19,57 %, Al = 7,93 %, Na = 0,87 %, Cu = 2,14 %, Dy = 10,31 %.

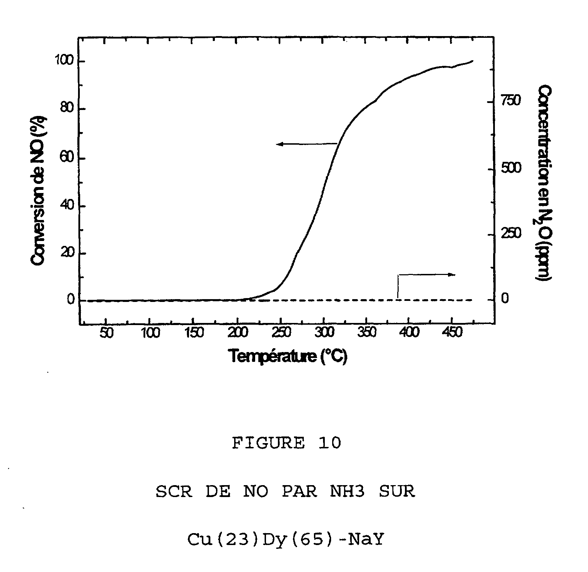

La figure 10 des profils SCR NO/$N_2O$ montre l'intérêt tout particulier de cette composition catalytique.

Exemple 9 : Faujasite mixte lanthanide/cuivre

On prépare une zéolithe mixte Cu(23)La(47)Pr(19)-NaY selon le mode opératoire de l'exemple 1, à la différence qu'au lieu de la solution de nitrate de calcium, on utilise une solution de "Ladi", ref 960781 de R.P., dont la composition en lanthanide est de 70 % de lanthane et 30 % de praséodyme (% en poids).
On obtient une poudre qui se révèle à l'analyse avoir la composition d'une Cu(23)La(47)Pr(19)-NaY, à savoir en poids, Si = 18,56 %, Al = 8,20 %, Na = 0,66 %, Cu = 2,25 %, La = 6,56 %, Pr = 2,75 %.

**Revendications**

1.  Procédé de réduction catalytique sélective SCR des oxydes d'azote à l'ammoniac, dans lequel on utilise comme catalyseur, une zéolithe échangée au cuivre ayant un rapport Si/Al de 0,8 à 20, dont l'arrangement structural de ses tétraèdres Si04 et AlO4 ménage à la fois des petites cavités accessibles au travers de fenêtres à 6 tétraèdres et de grandes cavités accessibles au travers de fenêtres formées d'au moins 8 tétraèdres, dont le taux d'échange en cuivre est de 5 à 60 %, le cuivre étant majoritairement localisé dans les grandes cavités.

2.  Procédé selon la revendication 1, dans lequel le catalyseur est une faujasite cubique X on Y, représentable par la formule générale

Cu (x) M' (y) M (z) FAU

dans laquelle

- FAU représente un réseau faujasite cubique avec un rapport Si/Al de 0,8 à 20,
- M' est un élément métallique de valence 2, 3 ou 4, d'un diamètre ionique compris entre 0,16 et 0,28 nm,
- M est $H^+$, $Na^+$, $K^+$,
- x, y et z sont les taux d'échange théoriques respectifs en ions cuivriques et en ions M' et M, exprimés en pourcent de la capacité totale d'échange de

  ladite faujasite,x, y et z ayant des valeurs

$$5 \leq x \leq 60,$$

$$20 \leq y \leq 70,$$

$$z < 100 - x - y.$$

3. Procédé selon la revendication 1, **caractérisé en ce que** le catalyseur est une faujasite cubique Y

$$Cu\ (x)\ M'\ (y)\ M\ (z)\ Y$$

4. Procédé selon la revendication 3, **caractérisé en ce que** le catalyseur est une faujasite CuCaY.

5. Procédé selon la revendication 3, **caractérisé en ce que** le catalyseur est une faujasite CuTrY, Tr représentant un lanthanide ou un mélange de lanthanides.

6. Procédé selon la revendication 1, **caractérisé en ce que** le catalyseur est une zéolithe représentable par la formule générale

$$Cu\ (x)\ M'\ (y)\ M(z)\ EMT$$

   dans laquelle

- EMT représente une faujasite hexagonale EMT,
- les autres éléments de la formule étant ceux de la revendication 2.

7. Procédé perfectionné SCR selon la revendication 1, **caractérisé en ce que** le catalyseur est une intercroissance de la faujasite Y selon la revendication 3 et d'EMT selon la revendication 6, en particulier les ZSM-3, ZSM-20, CSZ-1, ECR-30.

8. Faujasite mixte Cu (x)M' (y) M(z) FAU, dont l'arrangement structural ménage à la fois de petites cavités et de grandes cavités,
   dans laquelle

- FAU représente un réseau faujasite cubique avec un rapport Si/Al de 0,8 à 20,
- M' est un élément métallique de valence 2, 3 ou 4, d'un diamètre ionique compris entre 0,16 et 0,28nm,
- M est $H^+$, $Na^+$, $K^+$,
- x, y et z sont les taux d'échange théoriques respectifs en ions cuivriques et en ions M' et M, exprimés en pourcent de la capacité totale d'échange de ladite faujasite,

  x, y et z ayant des valeurs

$$5 \leq x \leq 60,$$

$$20 \leq y \leq 70$$

$$z \leq 100 - x - y$$

et les ions cuivriques étant majoritairement localisés dans les grandes cavités.

9.  Faujasite mixte Cu (x) M' (y) M (z) FAU selon la revendication 8, dans laquelle l'ion M' est un ion calcium.

10. Faujasite mixte Cu (x) M' (y)M (z) FAU selon la revendication 8, dans laquelle l'ion M' est un ion lanthanide, ou un mélange d'ions lanthanides.

11. Procédé pour l'obtention d'une zéolithe utilisée comme catalyseur SCR qui consiste

    -   à disposer d'une zéolithe de rapport Si/Al de 0,8 à 20, dont l'arrangement structural de ses tétraèdres $SiO_4$ et $AlO_4$ ménage à la fois des petites cavités accessibles au travers de fenêtres à 6 tétraèdres et de grandes cavités accessibles au travers de fenêtres formées d'au moins 8 tétraèdres,
    -   à la soumettre à un échange ionique par mise en contact avec une solution de sels d'un élément métallique de valence 2, 3 ou 4, d'un diamètre ionique compris entre 0,16 et 0,28 nm, dans des conditions telles qu'on réalise l'échange à un taux de 20 à 60 %,
    -   à calciner le résultat de l'échange à une température de 350 à 650°C,
    -   à soumettre le résultat de cette calcination à un échange ionique avec une solution d'un sel de cuivre, dans des conditions telles qu'on réalise l'échange à un taux de 5 à 60 %,
    -   à calciner le résultat de cet échange cuivrique à une température de 350 à 650°C.

12. Procédé selon revendication 11, avec comme zéolithe une faujasite mixte selon l'une des revendications 8 à 10.

**Patentansprüche**

1.  Verfahren zur selektiven katalytischen Reduktion (SCR) von Stickstoffoxiden mit Ammoniak, bei dem man als Katalysator einen kupferausgetauschten Zeolith mit einem Si/Al-Verhältnis von 0,8 bis 20, einer strukturellen Anordnung seiner $SiO_4$- und $AlO_4$-Tetraeder, die sowohl kleine Hohlräume, die über Fenster aus 6 Tetraedern zugänglich sind, als auch große Hohlräume, die über Fenster aus mindestens 8 Tetraedern zugänglich sind, ergibt, und einem Kupferaustauschgrad von 5 bis 60%, wobei sich das Kupfer hauptsächlich in den großen Hohlräumen befindet, verwendet.

2.  Verfahren nach Anspruch 1, bei dem es sich bei dem Katalysator um einen kubischen Faujasit X oder Y handelt, der durch die allgemeine Formel

$$Cu(x)M'(y)M(z)FAU$$

wiedergegeben werden kann, worin

    -   FAU für ein kubisches Faujasitgitter mit einem Si/Al-Verhältnis von 0,8 bis 20 steht,
    -   M' für ein 2-, 3- oder 4-wertiges Metallelement mit einem Ionendurchmesser zwischen 0,16 und 0,28 nm steht,
    -   M für $H^+$, $Na^+$ oder $K^+$ steht und
    -   x, y und z für die jeweiligen theoretischen Austauschgrade von Kupferionen und M'- und M-Ionen in Prozent der gesamten Austauschkapazität des Faujasits mit den Werten

$$5 \leq x \leq 60,$$

$$20 \leq y \leq 70,$$

$$z < 100\text{-}x\text{-}y$$

stehen.

**3.** Verfahren nach Anspruch 1, **dadurch gekennzeichnet, daß** es sich bei dem Katalysator um einen kubischen Faujasit Y

$$Cu(x)M'(y)M(z)Y$$

handelt.

**4.** Verfahren nach Anspruch 3, **dadurch gekennzeichnet, daß** es sich bei dem Katalysator um einen CuCaY-Faujasit handelt.

**5.** Verfahren nach Anspruch 3, **dadurch gekennzeichnet, daß** es sich bei dem Katalysator um einen CuTrY-Faujasit handelt, wobei Tr für ein Lanthanid oder Lanthanidengemisch steht.

**6.** Verfahren nach Anspruch 1, **dadurch gekennzeichnet, daß** es sich bei dem Katalysator um Zeolith handelt, der durch die allgemeine Formel

$$Cu(x)M'(y)M(z)EMT$$

wiedergegeben werden kann, worin

- EMT für einen hexagonalen Faujasit EMT steht und
- die anderen Elemente der Formel wie in Anspruch 2 definiert sind.

**7.** Verbessertes SCR-Verfahren nach Anspruch 1, **dadurch gekennzeichnet, daß** es sich bei dem Katalysator um eine Mischform des Faujasit Y nach Anspruch 3 und des EMT nach Anspruch 6, insbesondere ZSM-3, ZSM-20, CSZ-1, ECR-30, handelt.

**8.** Gemischter Faujasit Cu(x)M'(y)M(z)FAU mit einer strukturellen Anordnung, die sowohl kleine Hohlräume als auch große Hohlräume ergibt,
worin

- FAU für ein kubisches Faujasitgitter mit einem Si/Al-Verhältnis von 0,8 bis 20 steht,
- M' für ein 2-, 3- oder 4-wertiges Metallelement mit einem Ionendurchmesser zwischen 0,16 und 0,28 nm steht,
- M für $H^+$, $Na^+$ oder $K^+$ steht und
- x, y und z für die jeweiligen theoretischen Austauschgrade von Kupferionen und M'- und M-Ionen in Prozent der gesamten Austauschkapazität des Faujasits mit den Werten

$$5 \leq x \leq 60,$$

$$20 \leq y \leq 70,$$

$$z \leq 100\text{-}x\text{-}y$$

stehen
und sich die Kupferionen hauptsächlich in den großen Hohlräumen befinden.

**9.** Gemischter Faujasit Cu(x)M'(y)M(z)FAU nach Anspruch 8, bei dem M' für ein Calciumion steht.

10. Gemischter Faujasit Cu(x)M'(y)M(z)FAU nach Anspruch 8, bei dem M' für ein Lanthanidion oder Lanthanidionengemisch steht.

11. Verfahren zur Herstellung eines als SCR-Katalysator verwendeten Zeoliths, bei dem man

- einen Zeolith mit einem Si/Al-Verhältnis von 0,8 bis 20, einer strukturellen Anordnung seiner $SiO_4$- und $AlO_4$-Tetraeder, die sowohl kleine Hohlräume, die über Fenster aus 6 Tetraedern zugänglich sind, als auch große Hohlräume, die über Fenster aus mindestens 8 Tetraedern zugänglich sind, ergibt, bereitstellt,
- den Zeolith unter solchen Bedingungen einem Ionenaustausch durch Inberührungbringen mit einer Lösung von Salzen eines 2-, 3- oder 4-wertigen Metallelements mit einem Ionendurchmesser zwischen 0,16 und 0,28 nm unterwirft, daß sich ein Austauschgrad von 20 bis 60% ergibt;
- das Austauschprodukt bei einer Temperatur von 350 bis 650°C calciniert,
- das Calcinierungsprodukt unter solchen Bedingungen einem Ionenaustausch mit einer Lösung eines Kupfersalzes unterwirft, daß sich ein Austauschgrad von 5 bis 60% ergibt und
- das Kupferaustauschprodukt bei einer Temperatur von 350 bis 650°C calciniert.

12. Verfahren nach Anspruch 11, bei dem man als Zeolith einen gemischten Faujasit nach einem der Ansprüche 8 bis 10 verwendet.

**Claims**

1. Process for the selective catalytic reduction SCR of nitrogen oxides using ammonia, using as catalyst a copper-exchanged zeolite with an Si/Al ratio of 0.8 to 20, of which the structural arrangement of its $SiO_4$ and $AlO_4$ tetrahedra provides both small cavities accessible through windows having 6 tetrahedra and large cavities accessible through windows formed by at least 8 tetrahedra, of which the degree of copper exchange is from 5 to 60%, the copper being located mostly in the large cavities.

2. Process according to Claim 1, in which the catalyst is a cubic faujasite X or Y, which can be represented by the general formula:

$$Cu(x)M'(y)M(z)FAU$$

in which

- FAU represents a cubic faujasite lattice with an Si/Al ratio of 0.8 to 20,
- M' is a metallic element of valency 2, 3 or 4, having an ion diameter of between 0.16 and 0.28 nm,
- M is $H^+$, $Na^+$, $K^+$,
- x, y and z are the respective theoretical degrees of exchange of copper ions, M' ions and M ions, expressed as a percentage of the total exchange capacity of the said faujasite, x, y and z having values such that:

$$5 \leq x \leq 60,$$

$$20 \leq y \leq 70,$$

$$z < 100 -x -y.$$

3. Process according to Claim 1, **characterized in that** the catalyst is a Y cubic faujasite:

$$Cu(x)M'(y)M(z)Y$$

4. Process according to Claim 3, **characterized in that** the catalyst is a CaCuY faujasite.

**5.** Process according to Claim 3, **characterized in that** the catalyst is a CuTrY faujasite, Tr representing a lanthanide or a mixture of lanthanides.

**6.** Process according to Claim 1, **characterized in that** the catalyst is a zeolite which can be represented by the general formula:

$$Cu(x)M'(y)M(z)EMT$$

in which

- EMT represents an EMThexagonal faujasite,
- the other elements of the formula being those of Claim 2.

**7.** Process according to Claim 1, **characterized in that** the catalyst is an intergrowth of the Y faujasite according to Claim 3 and of EMT according to Claim 6, in particular ZSM-3, ZSM-20, CSZ-1 and ECR-30.

**8.** Cu(x)M'(y)M(z)FAU mixed faujasite
of which the structural arrangement provides both small cavities and large cavities,
in which

- FAU represents a cubic faujasite lattice with an Si/Al ratio of 0.8 to 20,
- M' is a metallic element of valency 2, 3 or 4, having an ion diameter of between 0.16 and 0.28 nm,
- M is $H^+$, $Na^+$, $K^+$,
- x, y and z are the respective theoretical degrees of exchange of copper ions, M' ions and M ions, expressed as a percentage of the total exchange capacity of the said faujasite,

x, y and z having values such that:

$$5 \leq x \leq 60,$$

$$20 \leq y \leq 70,$$

$$z \leq 100 -x -y,$$

and the copper ions being located mostly in the large cavities.

**9.** Cu(x)M'(y)M(z)FAU mixed faujasite according to Claim 8, in which the M' ion is a calcium ion.

**10.** Cu(x)M'(y)M(z)FAU mixed faujasite according to Claim 8, in which the M' ion is a lanthanide ion or a mixture of lanthanide ions.

**11.** Process for obtaining a useful zeolite as an SCR catalyst, which consists

- in using a zeolite having a 0.8 to 20 Si/Al ratio, of which the structural arrangement of its $SiO_4$ and $AlO_4$ tetrahedra provides both small cavities accessible through windows having 6 tetrahedra and large cavities accessible through windows formed by at least 8 tetrahedra,
- in subjecting it to ion exchange by bringing it into contact with a solution of salts of a metallic element of valency 2, 3 or 4, having an ion diameter of between 0.16 and 0.28 nm, under conditions such that the exchange is carried out to a degree of from 20 to 60%,
- in calcining the result of the exchange at a temperature of from 350 to 650°C,
- in subjecting the result of this calcining to ion exchange with a solution of a copper salt under conditions such that the exchange is carried out to a degree of from 5 to 60%,
- in calcining the result of this copper exchange at a temperature of from 350 to 650°C.

**12.** Process according to Claim 11, using as zeolite a mixed faujasite according to one of Claims 8 to 10.

FIGURE 1

STRUCTURE DE LA FAUJASITE CUBIQUE (FAU)

FIGURE 2

SCR DE NO PAR NH3 SUR Cu(76)-NaY

FIGURE 3

TPR DE Cu(76)-NaY

FIGURE 4

SCR DE NO PAR NH3 SUR

Cu(44)Ca(28)-NaY NON CALCINÉE

FIGURE 5

TPR DE

Cu(76)-NaY
Cu(44)Ca(28)-NaY NON CALCINÉE
Cu(36)Ca(51)-NaY CALCINÉE

FIGURE 6

SCR DE NO PAR NH3 SUR

Cu(36)Ca(51)-NaY

FIGURE 7

SCR PAR NH3 SUR

Cu(23)La(47)Pr(19)-NaY

FIGURE 8

SCR DE NO PAR NH3 SUR

Cu(195)-NaY

FIGURE 9

TPR DE PLUSIEURS ZEOLITHES

FIGURE 10

SCR DE NO PAR NH3 SUR

Cu(23)Dy(65)-NaY